Europäisches Patentamt

European Patent Office

Office européen des brevets

(19)

(11)     EP 0 620 186 B1

(12)                    **EUROPÄISCHE PATENTSCHRIFT**

(45) Veröffentlichungstag und Bekanntmachung des
     Hinweises auf die Patenterteilung:
     **07.02.1996  Patentblatt 1996/06**

(51) Int. Cl.$^6$: **C01B 11/02**,  B01J 14/00,
     B01D 3/20

(21) Anmeldenummer: **94200883.0**

(22) Anmeldetag: **30.03.1994**

(54) **Reaktor zum Erzeugen von Chlordioxid durch Umsetzen von Alkalichlorat mit Säure**

Reactor for the generation of chlorine dioxide by reaction of alkali metal chlorate and acid

Réacteur pour la production du dioxyde de chlore par réaction d'un chlorate d'un métal alcalin avec un acide

(84) Benannte Vertragsstaaten:
     **DE SE**

(30) Priorität: **14.04.1993 DE 4312230**

(43) Veröffentlichungstag der Anmeldung:
     **19.10.1994  Patentblatt 1994/42**

(73) Patentinhaber: **METALLGESELLSCHAFT AG**
     **D-60323 Frankfurt am Main (DE)**

(72) Erfinder:
     • **Ali, Metwalli, Dr.**
       **D-61184 Karben (DE)**
     • **Jedlicka, Gerhard**
       **D-65779 Kelkheim (DE)**

(56) Entgegenhaltungen:
     **EP-A- 0 094 718          EP-A- 0 295 747**
     **DE-A- 3 937 671**

## Beschreibung

Die Erfindung betrifft einen Reaktor zum Umsetzen von Alkalichlorat mit Säure, insbesondere Salzsäure, zum Erzeugen eines gasförmigen Gemisches aus Chlordioxid und Chlor, wobei der Reaktor mehrere gasdurchlässige Böden aufweist, welche Reaktionsetagen bilden, die durch Überlaufleitungen verbunden sind.

Ein solcher Reaktor ist aus dem US-Patent 4 851 198 und dem dazu korrespondierenden Europa-Patent 0 227 181, aus DE-A-37 19 878 sowie aus dem US-Patent 4 938 944 und dem dazu korrespondierenden Europa-Patent 0 345 863 bekannt. Diesen Reaktoren ist gemeinsam, daß sie Böden mit einer zentralen Gasverteilerglocke besitzen. Diese Glocke leitet ausströmendes Gas nur in eine Richtung nach außen und aufwärts in die zugehörige Reaktionsetage.

Ein Reaktor der eingangs genannten Art ist auch aus DE-A-39 37 671 bekannt. Er weist auf jedem Boden sternförmig oder parallel zueinander angeordnete Gasleitkammern auf. Durch Öffnungen in den Seitenwänden der Gasleitkammern tritt das gasförmige Gemisch in die jeweilige Reaktionsetage aus.

Der Erfindung liegt die Aufgabe zugrunde, bei geringem Materialaufwand die Gasverteilung erheblich zu verbessern, um dadurch einen besseren Strippeffekt und auch erhöhte Reaktionsgeschwindigkeiten zu erreichen. Erfindungsgemäß wird die Aufgabe beim eingangs genannten Reaktor dadurch gelöst, daß auf mindestens einem Boden ein der Gasverteilung dienender Ringkanal angeordnet ist, dessen

Außenwand zum Außenrand des Bodens gerichtete Gasaustrittsöffnungen und dessen Innenwand zum Zentrum des Bodens gerichtete Gasaustrittsöffnungen aufweist, daß im Ringkanal mindestens ein vom Boden ausgehendes, vertikales, an beiden Enden offenes Gasführungsrohr angeordnet ist, dessen oberes Ende von einer glockenartigen, mit dem Ringkanal verbundenen Kappe umgeben ist, und daß der Ringkanal einen Durchmesser der Innenwand vom 0,1- bis 0,7-fachen des Durchmessers des Außenrandes des Bodens aufweist.

Beim Reaktor wird in bekannter Weise $ClO_2$ aus folgender Reaktion erzeugt:

$$NaClO_3 + 2\ HCl \dashrightarrow ClO_2 + 1/2\ Cl_2 + NaCl + H_2O \quad (1)$$

wobei gleichzeitig jedoch auch die Nebenreaktion

$$NaClO_3 + 6\ HCl \dashrightarrow 3\ Cl_2 + NaCl + 3\ H_2O \quad (2)$$

nicht ganz unterdrückt werden kann. Durch aufwärts steigende Strippluft werden die erzeugten Gase aus den Reaktionsetagen entfernt.

Die bekannten Reaktoren, z.B. gemäß US-Patent 4 851 198, weisen die Nachteile auf, daß die Strippluft in der Flüssigkeit auf den Böden ungleichmäßig verteilt wird, daß örtlich starke Turbulenzen auftreten, die zu störender Schaumbildung führen, daß sich Salzansätze an den Gasaustrittsöffnungen der Gasverteilerglocken bilden und daß die Nebenreaktion (2), bei welcher kein $ClO_2$ erzeugt wird, nur unzureichend unterdrückt werden kann. Beim erfindungsgemäßen Reaktor werden diese Nachteile beseitigt oder zumindest erheblich verringert, auch ist es möglich, wegen der besseren Gasverteilung Reaktoren für höhere Leistungen zu bauen.

Vorzugsweise wird der zum erfindungsgemäßen Reaktor gehörende Ringkanal mit mindestens 2 Gasführungsrohren mit jeweils zugehöriger Kappe ausgestattet. Üblicherweise liegt die Zahl der Gasführungsrohre eines Ringkanals bei höchstens 6 und zumeist bei höchstens 4. Für eine möglichst gleichmäßige Gasverteilung auf jeder Reaktionsetage empfiehlt es sich, daß der Ringkanal einen Durchmesser der Innenwand vom 0,2- bis 0,6-fachen des Durchmessers des Außenrandes des Bodens aufweist.

Einzelheiten des Reaktors werden mit Hilfe der Zeichnung erläutert. Es zeigt:

Fig. 1    einen Längsschnitt durch den Reaktor in schematischer Darstellung und

Fig. 2    die Draufsicht auf einen Boden in perspektivischer Darstellung.

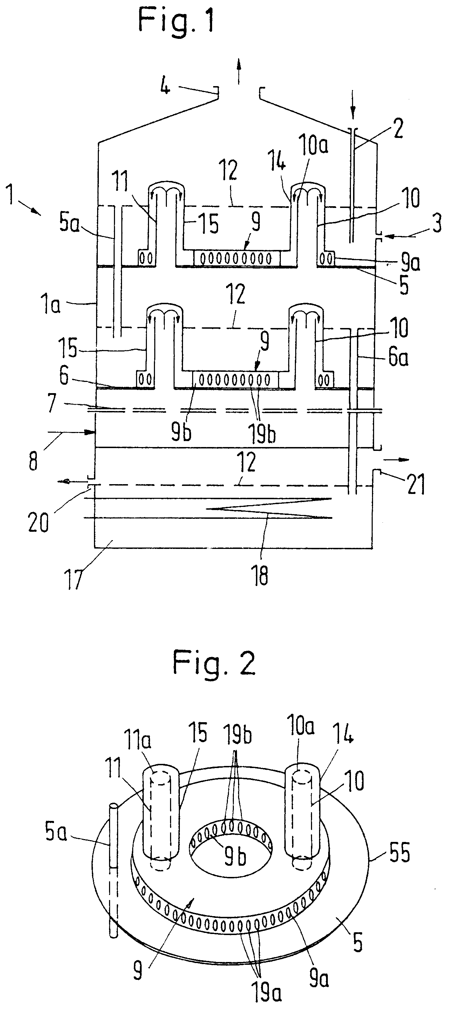

Der Reaktor (1) der Fig. 1 weist einen zylindrischen Mantel (1a), eine Zufuhrleitung (2) für wäßrige Alkalichloratlösung und mindestens eine Leitung (3) zum Einspeisen von Säure auf. Am oberen Ende ist der Reaktor mit einem Auslaß (4) für gasförmiges Produkt versehen. Der Reaktor weist mehrere Böden (5) und (6) auf, die jeweils die Unterseite einer Reaktionsetage bilden. Die Höhe der Flüssigkeit auf jedem Boden wird durch eine Überlaufleitung (5a) und (6a) bestimmt, welche die Flüssigkeit nach unten ableitet.

Der Reaktor (1) weist üblicherweise 3 bis 8 Reaktionsetagen auf, wobei in der Zeichnung nur 2 Etagen dargestellt sind. Die gestrichelte Doppellinie (7) bezeichnet einen nicht dargestellten Teil des Reaktors (1). Unter der untersten Reaktionsetage wird durch eine Leitung (8) von außen Strippluft zugeführt, die nach oben aufwärts durch die Reaktionsetagen strömt und die gasförmigen Produkte, insbesondere $ClO_2$ und $Cl_2$, zum Auslaß (4) mitnimmt. Zum Verteilen des Strippluft enthaltenden Gasgemisches sind die Böden (5) und (6) jeweils mit einer Gasverteilereinrichtung versehen, die einen Ringkanal (9) aufweist, vgl. auch Fig. 2. Der Ringkanal besitzt eine Außenwand (9a) und eine das Zentrum des Bodens (5) umgebende Innenwand (9b). Der in der Zeichnung dargestellte Ringkanal (9) ist ferner mit zwei vertikalen, an beiden Enden offenen Gasführungsrohren (10) und (11) versehen, wobei das obere Ende (10a) oder (11a) oberhalb des gestrichelt eingezeichneten Flüssigkeitsspiegels (12) liegt, vgl. Fig. 1. Zu jedem Gasführungsrohr (10) oder (11) gehört eine glockenartige Kappe (14) oder (15), die das Gasführungsrohr im Abstand umgibt und mit dem Ringkanal (9) verbunden ist.

Das den jeweiligen Boden von unten anströmende, stripplufthaltige Gasgemisch strömt zunächst in den Gasführungsrohren (10) und (11) aufwärts, tritt dann in den Ringbereich zwischen dem Rohr (10) oder (11) und der zugehörigen Kappe (14) oder (15) ein, wie das durch die gebogenen Pfeile in Fig. 1 angedeutet ist. In diesem Ringbereich strömt das Gasgemisch nach unten und gelangt dann in den Ringkanal (9), von wo es in die auf dem Boden befindliche Flüssigkeit hinein verteilt wird. Die Austrittsöffnungen (19a) der Außenwand (9a) des Ringkanals (9) leiten dabei das Gasgemisch in Richtung auf den Außenrand (55) des jeweiligen Bodens und von den Gasaustrittsöffnungen (19b) der Innenwand (9b) des Ringkanals strömt das Gasgemisch zum Zentrum des Bodens und natürlicherweise aufwärts durch die Flüssigkeit dieses Bereichs. Ersichtlicherweise wird so eine sehr gute Verteilung des Gasgemisches in der über dem Boden befindlichen Flüssigkeit erreicht.

Unterhalb der Strippluftzufuhrleitung (8) befindet sich eine Kammer (17) mit einer Heizeinrichtung (18), um ausreagierte Lösung in bekannter Weise auszukochen, bevor die Lösung durch den Abzug (20) aus dem Reaktor (1) entfernt wird; Brüden werden bei (21) abgezogen.

## Patentansprüche

1. Reaktor (1) zum Umsetzen von Alkalichlorat mit Säure, insbesondere Salzsäure, zum Erzeugen eines gasförmigen Gemisches aus Chlordioxid und Chlor, wobei der Reaktor mehrere gasdurchlässige Böden (5, 6) aufweist, welche Reaktionsetagen bilden, die durch Überlaufleitungen (5a, 6a) verbunden sind, dadurch gekennzeichnet, daß auf mindestens einem Boden ein der Gasverteilung dienender Ringkanal (9) angeordnet ist, dessen Außenwand (9a) zum Außenrand des Bodens (5) gerichtete Gasaustrittsöffnungert (19a) und dessen Innenwand (9b) zum Zentrum des Bodens gerichtete Gasaustrittsöffnungen (19b) aufweist, daß im Ringkanal (9) mindestens ein vom Boden ausgehendes, vertikales, an beiden Enden offenes Gasführungsrohr (10, 11) angeordnet ist, dessen oberes Ende von einer glockenartigen, mit dem Ringkanal verbundenen Kappe (14, 15) umgeben ist, und daß der Ringkanal (9) einen Durchmesser der Innenwand (9b) vom 0,1- bis 0,7-fachen des Durchmessers des Außenrandes des Bodens aufweist.

2. Reaktor nach Anspruch 1, dadurch gekennzeichnet, daß der Ringkanal (9) mindestens zwei Gasführungsrohre (10, 11) mit zugehörigen Kappen (14, 15) aufweist.

## Claims

1. A reactor (1) for reacting alkali chlorate with acid, particularly hydrochloric acid, to prepare an aqueous mixture of chlorine dioxide and chlorine, which reactor comprises a plurality of gas-permeable plates (5, 6), which define reaction levels, which are interconnected by overflow lines (5a, 6a), characterized in that an annular duct (9), which serves to distribute gas, is provided on at least one plate and is provided in its outer wall (9a) with gas exit openings (19a) directed toward the outer edge of the plate (5) and in its inner wall (9b) with gas exit openings (19b) directed towards the centre of the plate, that at least one vertical gas-conducting tube (10, 11), which is open at both ends, is disposed in the annular duct (9) and extends from the plate and at its top end is surrounded by a bell-like cap (14, 15), which is connected to the annular duct, and that the diameter of the inner wall (9b) of the annular duct is 0.1 to 0.7 time the diameter of the outer edge of the plate.

2. A reactor according to claim 1, characterized in that the annular duct (9) is provided with at least two gas-conducting tubes (10, 11) and associated caps (14, 15).

## Revendications

1. Réacteur (1) pour faire réagir un chlorate de métal alcalin sur un acide, notamment l'acide chlorhydrique, pour produire un mélange gazeux de dioxyde de chlore et de chlore, dans lequel le réacteur comprend plusieurs plateaux (5,6) perméables aux gaz, qui forment des étages de réaction et qui sont reliés par des conduits de trop plein (5a,6a), caractérisé en ce que un canal (9) annulaire servant à la répartition du gaz est prévu sur au moins un plateau, la paroi (9a) extérieure de ce canal comportant des ouvertures (19a) de sortie de gaz dirigées vers le pourtour extérieur du plateau (5) et la paroi (9b) intérieure comportant des ouvertures (19b) de sortie de gaz dirigées vers le centre du plateau, en ce que, dans le canal (9) annulaire, est prévu au moins un conduit (10,11) de passage des gaz issu du plateau, vertical, ouvert à ses deux extrémités et dont l'extrémité supérieure est recouverte d'un capuchon (14,15) en forme de calotte et relié au canal annulaire, et en ce que le canal (9) annulaire a un diamètre de paroi (9b) intérieure représentant de 0,1 à 0,7 fois le diamètre du pourtour extérieur du plateau.

2. Réacteur suivant la revendication 1 caractérisé en ce que le canal (9) annulaire comporte au moins deux conduits (10,11) de passage des gaz avec des capuchons (14,15) correspondants.

# Fig. 1

# Fig. 2

4